# FASCICULE DE BREVET EUROPEEN

(11) **EP 3 718 280 B1**
(45) Date de publication et mention de la délivrance du brevet: **22.02.2023**
(21) Numéro de dépôt: 18825753.9
(22) Date de dépôt: 27.11.2018
(51) Int. Cl.: H04L 9/40

(54) **TECHNIQUE DE TRAITEMENT DE MESSAGES ENVOYÉS PAR UN DISPOSITIF COMMUNICANT**
TECHNIK ZUR VERARBEITUNG VON NACHRICHTEN, DIE VON EINER KOMMUNIKATIONSVORRICHTUNG GESENDET WERDEN
TECHNIQUE FOR PROCESSING MESSAGES SENT BY A COMMUNICATING DEVICE

(30) Priorité: 01.12.2017 FR 1761549
(43) Date de publication de la demande: 07.10.2020
(73) Titulaire: Orange, 92130 Issy-les-Moulineaux (FR)
(72) Inventeur: LAVEDRINE, Rémi, 92326 Châtillon Cedex (FR)
(86) Numéro de dépôt international: PCT/FR2018/052984
(87) Numéro de publication internationale: WO 2019/106273

(56) Documents cités:
- US-A1- 2008 177 843
- US-A1- 2010 153 394
- US-A1- 2017 013 005

## Description

L'invention se rapporte au domaine général des télécommunications.

L'invention concerne plus particulièrement une technique de traitement de messages envoyés par un dispositif communicant. Plus précisément, ces messages sont envoyés par l'intermédiaire d'une passerelle d'accès à destination d'un dispositif récepteur.

La technique de traitement se situe dans le domaine des dispositifs communicants ou objets connectés.

Par dispositif communicant ou objet connecté, on entend un dispositif apte à échanger des informations avec d'autres dispositifs. Dans ces dispositifs, on distingue ceux qui échangent des informations par l'intermédiaire d'un réseau de communication administré par un opérateur de réseau, avec selon les cas, un autre dispositif, un terminal de communication ou encore un équipement informatique du réseau de communication. Le réseau de communication peut s'appuyer sur des technologies de réseaux mobiles cellulaires dites 2G, 3G, 4G, 5G ainsi que des technologies de réseaux basse consommation et longue portée LPWA (pour « Low Power Wide Area ») tels que le réseau LoRa.

Du point de vue de l'utilisateur, la communication au moyen de réseaux dits longue portée se différencie de celle au moyen de réseaux dits faible portée (tels que Bluetooth, Bluetooth Low Energy, WiFi, Zigbee, Z-Wave, etc) par les avantages suivants :
- indépendance vis-à-vis d'un équipement intermédiaire pour accéder à un réseau de communication étendu ;
- sécurité : la plupart des technologies longue portée intègre intrinsèquement des caractéristiques de sécurité telles qu'une authentification, un chiffrement, qui offrent une garantie de sécurité native pour les applications mises en oeuvre sur ce réseau ;
- simplicité de configuration et d'utilisation : il n'y a pas besoin de configurer une clé de sécurité ou de réaliser un appairage, opérations qui peuvent se révéler extrêmement complexes pour l'utilisateur lorsque le dispositif n'intègre pas d'écran ou dispose de périphériques d'entrée/sortie limités, ou bien pour des utilisateurs n'étant pas habitués à utiliser ce type de technologies.

On constate que ces dispositifs communicants sont à ce jour peu sécurisés et deviennent la cible d'attaques. Il est possible que certains dispositifs communicants présentent une ou plusieurs failles de sécurité, susceptibles de permettre à un individu malveillant de prendre le contrôle à distance, par exemple par installation sur le dispositif communicant d'un logiciel malveillant (en anglais « malware »), en vue d'y opérer des activités malveillantes, telles que du vol de données, ou une attaque par déni de service par exemple (DDoS pour « Distributed Denial of Service attack » en anglais). De telles attaques par déni de service visent des dispositifs récepteurs auxquels les dispositifs communicants envoient des données.

Les publications brevet US2010/153394 A1 et US2008/0177843 A1 se situent dans le domaine du filtrage des courriers électroniques indésirables.

Un des buts de la technique proposée est de remédier à des insuffisances/inconvénients de l'état de la technique et/ou d'y apporter des améliorations.

Selon un premier aspect, il est proposé un procédé de traitement de messages envoyés par un dispositif communicant. Le procédé comprend :
- une vérification par un dispositif de sécurité qu'un message envoyé par un dispositif communicant à destination d'un dispositif récepteur est un message à transmettre, le message étant transmis au dispositif récepteur lorsque la vérification est positive ;
- une réception par le dispositif de sécurité d'une notification émise par le dispositif récepteur indiquant que le message transmis est à bloquer,
des messages ultérieurs de même type que le message pour lequel la notification a été reçue, émis par des dispositifs communicants fournis par le même fabricant et de même identifiant de produit que ceux du dispositif communicant ayant émis ledit message étant bloqués par le dispositif de sécurité lors de ladite vérification.

Ceci permet ainsi de protéger les dispositifs récepteurs vis-à-vis de dispositifs communicants susceptibles de présenter une faille de sécurité. En effet, il devient courant pour des tiers malveillants de prendre le contrôle de dispositifs communicants du fait de leur faible niveau de sécurité. La mise en oeuvre de ce procédé permet ainsi d'accroître la sécurité générale en maîtrisant rapidement les comportements malveillants des dispositifs communicants. Une détection d'un comportement malveillant par le dispositif récepteur permet de mettre en oeuvre directement un blocage par le dispositif de sécurité de messages ultérieurs transmis par d'autres dispositifs communicants. Le dispositif de sécurité met ainsi en oeuvre pour les dispositifs communicants dont il a la charge les mesures nécessaires à une protection du dispositif récepteur.

Le dispositif récepteur se situe dans des parties du réseau, dites en arrière-plan (« back-end » en anglais). Il est ainsi prévu pour recevoir des données en provenance de dispositifs communicants se trouvant dans des parties du réseau, dites frontale ( « front-end » en anglais). Le dispositif récepteur peut par exemple fournir un service à partir des données reçues. Le dispositif de sécurité est positionné dans la partie frontale également et permet de protéger la partie arrière-plan du réseau.

Le procédé de traitement est particulièrement bien adapté pour être mis en oeuvre pour des dispositifs communicants, qui disposent généralement de peu de puissance processeur, mais qui comprennent des interfaces avec le réseau de communication étendu, le réseau Internet. Du fait de ces interfaces qui permettent de prendre le contrôle à distance, ces dispositifs communicants deviennent la cible d'attaques.

Le dispositif de sécurité peut être colocalisé avec une passerelle d'accès au réseau de communication. Cette passerelle d'accès permet aux dispositifs communicants d'accéder au réseau de communication, et donc de transmettre des données au dispositif récepteur, qui se situe dans la partie en arrière-plan du réseau.

Dans un mode de réalisation particulier, la passerelle d'accès met en oeuvre les fonctions du dispositif de sécurité.

Le procédé de traitement tire ainsi profit de la détection d'un comportement malveillant d'un dispositif communicant par le dispositif récepteur pour neutraliser les transmissions éventuelles d'autres dispositifs communicants d'un message de même type. Ces autres dispositifs communicants sont des dispositifs de même identifiant de produit et donc fournis par le même fabricant.

Aucune modification n'est requise sur les dispositifs communicants, le procédé de traitement étant mis en oeuvre dans le réseau, essentiellement dans la partie frontale du réseau.

Les différents modes ou caractéristiques de réalisation mentionnés ci-après peuvent être ajoutés indépendamment ou en combinaison les uns avec les autres, au procédé de traitement tel que défini précédemment.

Dans un mode de réalisation particulier, le procédé de traitement comprend en outre une neutralisation du dispositif communicant, pour lequel la notification a été reçue.

Ainsi, le dispositif communicant ayant émis le message se retrouve neutralisé. Bien que contrôlé à distance par un tiers malveillant, le dispositif communicant ne peut plus nuire au dispositif récepteur. Il peut s'agir de différents niveaux de neutralisation. Dans un mode de réalisation particulier, les accès au réseau de communication du dispositif communicant sont désactivés : il ne peut plus envoyer de messages au dispositif récepteur. Dans un autre mode de réalisation, le dispositif communicant est mis hors d'usage, par exemple en bloquant le démarrage de son système d'exploitation.

Dans un mode de réalisation particulier du procédé de traitement, des messages ultérieurs de même type que le message pour lequel la notification a été reçue, émis par des dispositifs communicants fournis par le même fabricant et d'identifiant de produit différent de ceux du dispositif communicant ayant émis ledit message sont bloqués par le dispositif de sécurité lors de ladite vérification.

Ainsi, la prise de contrôle à distance par un tiers malveillant de dispositifs communicants du même constructeur est rapidement contenue, les messages émis par ces dispositifs se retrouvant directement bloqués par le dispositif de sécurité, avant de parvenir au dispositif récepteur.

Dans un mode de réalisation particulier, le procédé de traitement comprend une obtention par le dispositif de sécurité d'au moins un message à transmettre.

Il est ainsi possible de configurer le dispositif de sécurité avec un ensemble de messages autorisés pour un identifiant de produit donné. Il est également possible une fois l'attaque terminée d'autoriser de nouveau une transmission du message, qui avait été indiqué comme étant à bloquer.

Selon un deuxième aspect, il est proposé un dispositif de sécurité destiné à traiter un message envoyé par un dispositif communicant à destination d'un dispositif récepteur, ledit dispositif de sécurité comprenant un module de traitement agencé pour :
- vérifier que ledit message est un message à transmettre ;
- transmettre ledit message lorsque la vérification est positive et le bloquer lorsque la vérification est négative ;
- recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par le même fabricant et de même identifiant de produit que ceux du dispositif communicant ayant émis ledit message.

Les avantages énoncés pour le procédé de traitement selon le premier aspect sont transposables directement au dispositif de sécurité.

Dans un mode de réalisation particulier du dispositif de sécurité, le module de traitement est en outre agencé pour bloquer des messages ultérieurs de même type que le message pour lequel la notification a été reçue, émis par des dispositifs communicants fournis par le même fabricant et d'identifiant de produit différent de ceux du dispositif communicant ayant émis ledit message.

Selon un troisième aspect, il est proposé un système de sécurité comprenant :
- un dispositif de sécurité destiné à traiter un message envoyé par un dispositif communicant à destination d'un dispositif récepteur, ledit dispositif de sécurité comprenant un module de traitement agencé pour :
   - vérifier que ledit message est un message à transmettre ;
   - transmettre ledit message lorsque la vérification est positive et le bloquer lorsque la vérification est négative ;
   - recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par le même identifiant de fabricant et de même identifiant de produit que ceux du dispositif communicant ayant émis ledit message ;
- un dispositif récepteur, agencé pour recevoir ledit message envoyé par le dispositif communicant et transmis par le dispositif de sécurité et pour envoyer ladite notification au dispositif de sécurité.

Les avantages énoncés pour le procédé de traitement selon le premier aspect sont transposables directement au système de sécurité.

Selon un quatrième aspect, il est proposé un programme pour un dispositif de sécurité, comprenant des instructions de code de programme destinées à commander l'exécution de celles des actions du procédé de traitement précédemment décrit mises en oeuvre par le dispositif de sécurité, lorsque ce programme est exécuté par ce dispositif et un support d'enregistrement lisible par un dispositif sur lequel est enregistré un programme pour un dispositif.

Les avantages énoncés pour le procédé de traitement selon le premier aspect sont transposables directement au programme pour un dispositif de sécurité et au support d'enregistrement.

La technique de traitement de messages envoyés par un dispositif communicant sera mieux comprise à l'aide de la description suivante de modes de réalisation particuliers, en référence aux dessins annexés sur lesquels :
- la figure 1 représente des dispositifs communicants dans leur environnement dans un mode de réalisation particulier ;
- la figure 2 illustre des étapes d'un procédé de traitement selon un mode particulier de réalisation ;
- la figure 3 représente un dispositif de sécurité dans un mode de réalisation particulier.

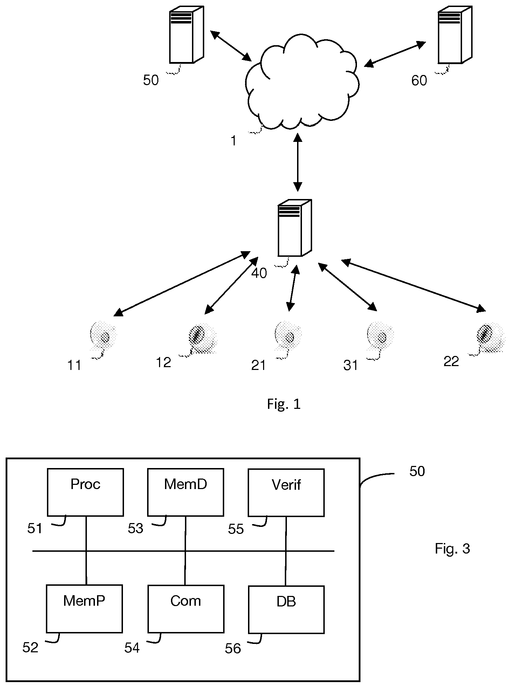

La **figure 1** représente un environnement dans lequel est mis en oeuvre le procédé de traitement dans un mode de réalisation particulier. L'environnement représenté comprend des dispositifs communicants 11, 21, 31, 12, 22 accédant à un réseau de communication 1 par l'intermédiaire d'une passerelle d'accès 40. Un dispositif ou objet communicant ou connecté, est un objet adapté pour échanger des informations par l'intermédiaire d'un réseau de communication, avec selon les cas, un autre objet, un terminal de communication ou encore un équipement informatique 60 du réseau de communication. Ainsi, dans la suite, on désigne par dispositif communicant, aussi bien des objets physiques connectés au réseau que des applications logicielles « virtualisées » associées à certains de ces objets. De tels dispositifs communicants peuvent être désignés par l'acronyme loT, pour l'anglais « Internet of Things », en français « Internet des objets ».

Le dispositif communicant 11, 21, 31, 12, 22 peut être tout type de terminal permettant de transmettre des données, tels qu'un téléphone portable, un téléphone intelligent (« smartphone » en anglais), une tablette, un objet connecté.

Ainsi, un dispositif communicant ou objet connecté peut correspondre à un terminal mobile, une montre adaptée pour transmettre des informations à un terminal mobile via un réseau de communication étendu tel que le réseau Internet, un détecteur de fumée adapté pour communiquer avec un terminal mobile distant afin de signaler la présence de fumée dans une maison, un boitier de surveillance médicale, un boitier de géolocalisation. Sur la figure 1, sont représentés des thermostats 11, 21, 31 et des détecteurs de mouvement 12, 22. On rappelle ici qu'il s'agit d'un exemple d'environnement et qu'aucune limitation n'est attachée au type de ces dispositifs communicants, ni à leur nombre.

Ces dispositifs communicants sont adaptés pour transmettre des données à un dispositif informatique distant, appelé par la suite dispositif récepteur, par l'intermédiaire d'un réseau de communication 1. Ces données sont transmises dans des messages.

Ces messages sont envoyés par l'intermédiaire de la passerelle d'accès 40. Cette passerelle d'accès dépend du réseau d'accès. Le réseau d'accès correspond par exemple à un réseau de communication mobile de type GSM, EDGE, 3G, 3G+ ou 4G (également appelé LTE pour « Long Term Evolution »)... Le réseau d'accès peut également correspondre à un réseau sans fil de type WiFi selon la norme IEEE 802.11. Le réseau d'accès peut encore correspondre à un réseau basse consommation et longue portée LPWA (pour « Low Power Wide Area ») tel que le réseau LoRa.

Dans le mode de réalisation représenté, le dispositif communicant 11, 21, 31, 12, 22 envoie des données à un serveur 60 en tant que dispositif récepteur. Ce serveur 60 est agencé pour fournir un service à partir des données reçues. Ce service peut correspondre par exemple à un service de santé, un service d'aide à la personne, un service de localisation. Aucune limitation n'est attachée au nombre de dispositifs récepteurs.

Le dispositif communicant est identifié par un identifiant unique. Cet identifiant correspond par exemple à un identifiant unique de type IEEE EUI-48 (pour « Extended Unique Identifier »). Cet identifiant unique est un nombre codé sur 48 bits permettant d'identifier notamment le fabricant, le produit et le numéro de série.

Pour un réseau de type longue portée et basse consommation, par exemple LoRA, cet identifiant unique peut par exemple correspondre à l'identifiant unique du dispositif DevEUI.

Pour un réseau de communication mobile, cet identifiant unique est un identifiant mémorisé dans un élément de sécurité (ou « Secure Element ») du dispositif communicant lors de la phase de configuration de ce dernier.

Sur la figure 1 est également représenté un dispositif de sécurité 50. Dans le mode de réalisation particulier qui est décrit, celui-ci reçoit l'ensemble des messages envoyés à destination d'un dispositif récepteur par des dispositifs communicants accédant au réseau de communication par l'intermédiaire de la passerelle d'accès 40. Il se situe en coupure des messages envoyés par les dispositifs communicants avant transmission des messages vérifiés vers le dispositif récepteur. Le dispositif de sécurité 50 est agencé pour vérifier qu'un message envoyé par un dispositif communicant à destination d'un dispositif récepteur est un message à transmettre. Un message à transmettre est un message dit autorisé. Un message qui n'est pas à transmettre est bloqué par le dispositif de sécurité et est un message dit non autorisé. Cette vérification est détaillée ultérieurement. En particulier, dans l'environnement représenté à la figure 1, le dispositif de sécurité transmet au serveur 60 les messages qui lui sont destinés. Le dispositif de sécurité transmet ainsi les messages en fonction du dispositif récepteur à qui ils sont destinés. Le dispositif de sécurité situé dans la partie frontale du réseau protège alors une pluralité de dispositifs récepteurs.

Dans ce mode de réalisation particulier, le dispositif de sécurité est associé à une passerelle d'accès. Le dispositif de sécurité et la passerelle d'accès peuvent être colocalisés. Le dispositif de sécurité peut également être intégré dans la passerelle d'accès 40.

Sur la figure 1, un seul dispositif de sécurité est représenté. Aucune limitation n'est attachée à cette représentation.

La **figure 3** illustre de manière schématique un dispositif de sécurité 50 dans un mode de réalisation particulier.

Le dispositif de sécurité 50, tel que représenté à la figure 3, comprend notamment :
- un processeur 51 pour exécuter des instructions de code de modules logiciels ;
- une zone mémoire 52, agencée pour mémoriser un programme qui comprend des instructions de code pour mettre en oeuvre des étapes du procédé de traitement ;
- une mémoire de stockage 53, agencée pour stocker des données utilisées lors de la mise en oeuvre du procédé de traitement ;
- un module de communication 54, formant une interface de communication avec un réseau de communication, agencé pour communiquer avec des dispositifs d'un réseau de communication ;
- un module de traitement 55, agencé pour vérifier qu'un message envoyé par un dispositif communicant à destination d'un dispositif récepteur est un message à transmettre, le message étant transmis au dispositif récepteur lorsque la vérification est positive ;
- une mémoire de stockage 56, agencé pour mémoriser des messages à bloquer.

Le module de communication 54 correspond à un module d'émission/réception qui dépend de la technologie d'accès radio.

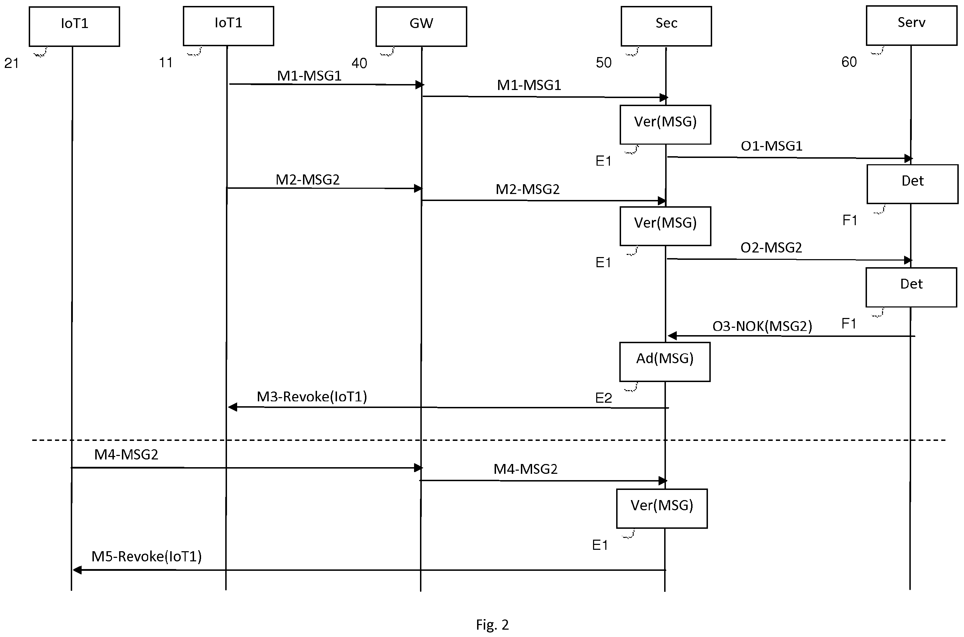

Le procédé de traitement mis en oeuvre par le dispositif de sécurité 50 va maintenant être décrit en relation avec la **figure 2****.**

On se place par la suite au niveau du dispositif communicant 11.

Le dispositif communicant 11 envoie un message M1-MSG1 à destination du serveur 60, en tant que dispositif récepteur, par l'intermédiaire de la passerelle d'accès 40. Cette dernière transmet le message reçu au dispositif de sécurité 50.

Le dispositif de sécurité 50 vérifie (E1) que le message envoyé MSG1 par le dispositif communicant 11 à destination d'un dispositif récepteur 60 est un message à transmettre pour ce type de dispositif communicant. Pour cela, le dispositif de sécurité 50 compare le message MSG1 avec des messages mémorisés dans la mémoire de stockage 56.

Lorsque la vérification est positive, le message MSG1 est transmis vers sa destination, le dispositif récepteur 60.

Le dispositif récepteur 60 vérifie (F1) si le message MSG1 est un message émis par un dispositif communicant malveillant. Cette détection peut s'appuyer sur des analyses effectuées sur un enchaînement de messages reçus d'un dispositif communicant, des corrélations entre des messages reçus de différents dispositifs communicants, des analyses temporelles sur un enchaînement de messages. Aucune limitation n'est attachée à la manière dont le dispositif récepteur 60 détecte que le message MSG1 est un message à bloquer ou non. A titre illustratif, le message MSG1 est un message « sain ». Le dispositif récepteur 60 traite alors ce message MSG1.

Par la suite, le dispositif communicant 11 envoie un message M2-MSG2 à destination du serveur 60 par l'intermédiaire de la passerelle d'accès 40. Cette dernière transmet le message reçu au dispositif de sécurité 50.

Le dispositif de sécurité 50 vérifie (E1) que le message envoyé MSG2 par le dispositif communicant 11 à destination d'un dispositif récepteur 60 est un message à transmettre. Pour cela, le dispositif de sécurité 50 compare le message MSG2 avec des messages mémorisés dans la mémoire de stockage 56. Le message MSG2 n'est pas considéré comme un message à bloquer pour ce type de dispositif communicant. La vérification étant positive, le message MSG2 est transmis (message O2-MSG2) vers sa destination, le dispositif récepteur 60.

Le dispositif récepteur 60 détecte (F1) que le message MSG2 est un message émis par un dispositif communicant malveillant. Ce dispositif est devenu malveillant, par exemple du fait d'une prise de contrôle à distance d'un tiers malveillant.

Le dispositif récepteur 60 envoie alors au dispositif de sécurité 50 une notification O3-NOK(MSG2) indiquant que le message transmis est à bloquer pour ce type de dispositif communicant.

Cette notification est reçue (E2) par le dispositif de sécurité 50 et le message MSG 2 est mémorisé dans la mémoire de stockage 56. Cette notification indique au dispositif de sécurité 50 que des messages ultérieurs de même type que le message MSG2 pour lequel la notification a été reçue, émis par des dispositifs communicants fournis par le même fabricant et de même identifiant de produit que ceux du dispositif communicant 11 ayant émis ce message doivent être bloqués par le dispositif de sécurité 50 lors de la vérification (E1).

Dans un mode de réalisation particulier, illustré à la figure 2, le dispositif de sécurité 50 envoie un message M3-Revoke de neutralisation du dispositif communicant 11, pour lequel la notification O3-NOK(MSG2) a été reçue.

Il peut s'agir de différents niveaux de neutralisation. Dans un mode de réalisation particulier, les accès au réseau de communication du dispositif communicant 11 sont désactivés : il ne peut plus envoyer de messages à des dispositifs récepteurs. Dans un autre mode de réalisation, le dispositif communicant est mis hors d'usage, par exemple en bloquant le démarrage de son système d'exploitation. Le dispositif communicant 11 ne peut plus envoyer aucune donnée et ne représente plus un risque pour les autres dispositifs et le réseau de communication. Le dispositif récepteur 60 ne traite plus les messages en provenance de ce dispositif communicant 11 révoqué.

De retour à la figure 2, on se place maintenant au niveau du dispositif communicant 21, qui est un produit fourni par le même fabricant et du même type que le dispositif communicant 11.

Le dispositif communicant 21 envoie un message M4-MSG2 à destination du serveur 60 par l'intermédiaire de la passerelle d'accès 40. A titre illustratif, ce message M4 transite par cette passerelle d'accès 40. Il est bien entendu que dans d'autres exemples, le message M4 pourrait transiter par l'intermédiaire d'une autre passerelle d'accès, associée au même dispositif de sécurité 50. La passerelle d'accès 40 transmet le message reçu au dispositif de sécurité 50.

Le dispositif de sécurité 50 vérifie (E1) que le message envoyé MSG2 par le dispositif communicant 21 à destination d'un dispositif récepteur 60 est un message à transmettre. Pour cela, le dispositif de sécurité 50 compare le message MSG2 avec des messages mémorisés dans la mémoire de stockage 56. Le message MSG2 est émis par un dispositif communicant fourni par le même fabricant et de même identifiant de produit que ceux du dispositif communicant 11 à l'origine de la notification O3-NOK(MSG2). Il est donc bloqué par le dispositif de sécurité 50 et n'est pas transmis à destination du dispositif récepteur 60. Ce dernier est ainsi protégé contre des attaques résultant de la prise de contrôle de dispositifs communicants fournis par le même fabricant et correspondant à un produit donné.

Dans un mode de réalisation particulier, le dispositif de sécurité 50 envoie un message M5-Revoke de neutralisation du dispositif communicant 21. Comme décrit précédemment pour la neutralisation du dispositif communicant 11, il peut s'agir de différents niveaux de neutralisation. Le dispositif communicant 21 ne peut plus envoyer aucune donnée et ne représente plus un risque pour les autres dispositifs et le réseau de communication.

Dans ce mode de réalisation, un message MSG2 émis par un dispositif communicant fourni par le même fabricant mais d'identifiant de produit différent n'est pas bloqué et est transmis au dispositif récepteur 60. On souligne ici qu'un message MSG2 émis par un dispositif communicant fourni par un fabricant différent n'est également pas bloqué et est transmis au dispositif récepteur 60.

Dans un autre mode de réalisation, des messages ultérieurs de même type que le message MSG2 pour lequel la notification O3-NOK(MSG2) a été reçue, émis par des dispositifs communicants fournis par le même fabricant mais d'identifiant de produit différent de ceux du dispositif communicant ayant émis ce message sont bloqués par le dispositif de sécurité 50 lors de la vérification (E1).

A titre illustratif, on se place au niveau du dispositif communicant 12, fourni par le même fabricant que le dispositif communicant 11 (thermostat). Toutefois, ce dispositif communicant 12 (détecteur de mouvement) est un produit d'un autre type.

Le dispositif communicant 12 envoie un message MSG2 à destination du serveur 60 par l'intermédiaire de la passerelle d'accès 40. A titre illustratif, ce message MSG2 transite par cette passerelle d'accès 40. Il est bien entendu que dans d'autres exemples, le message MSG2 pourrait transiter par l'intermédiaire d'une autre passerelle d'accès, associée au même dispositif de sécurité 50. La passerelle d'accès 40 transmet le message reçu au dispositif de sécurité.

Le dispositif de sécurité 50 vérifie (E1) que le message envoyé MSG2 par le dispositif communicant 12 à destination d'un dispositif récepteur 60 est un message à transmettre. Pour cela, le dispositif de sécurité 50 compare le message MSG2 avec des messages mémorisés dans la mémoire de stockage 56. Le message MSG2 est émis par un dispositif communicant fourni par le même fabricant mais d'identifiant de produit différent de ceux du dispositif communicant 11 à l'origine de la notification O3-NOK(MSG2). Il est donc bloqué par le dispositif de sécurité 50 et n'est pas transmis à destination du dispositif récepteur 60. Ce dernier est ainsi protégé contre des attaques résultant de la prise de contrôle de dispositifs communicants fournis par le même fabricant bien que correspondant à un produit différent.

Dans un mode de réalisation particulier, le dispositif de sécurité 50 envoie un message de neutralisation du dispositif communicant 12. Comme décrit précédemment pour la neutralisation du dispositif communicant 11, il peut s'agir de différents niveaux de neutralisation. Le dispositif communicant 12 ne peut plus envoyer aucune donnée et ne représente plus un risque pour les autres dispositifs et le réseau de communication.

Dans les modes de réalisation décrits précédemment, la mémoire de stockage 56 mémorise des messages, tels que le message MSG2, pour lesquels une notification a été reçue (E2) par le dispositif de sécurité 50. Ces messages sont des messages à bloquer par le dispositif de sécurité 50. A l'état initial, tous les messages sont dits à transmettre. La mémoire de stockage 56 s'enrichit au fur et à mesure en fonction des messages pour lesquels une notification est reçue.

Dans un mode de réalisation particulier, la mémoire de stockage 56 mémorise également des messages à transmettre. Ces messages sont supposés être « sains » ou autorisés. Il est ainsi possible de mémoriser un ensemble de messages susceptibles d'être émis par des dispositifs communicants fournis par un même fabricant et de même identifiant de produit. Cet ensemble de messages est par exemple obtenu du fabricant. Le dispositif de sécurité 50 et sa mémoire de stockage 56 sont configurés avec cet ensemble de messages. Dans un mode de réalisation particulier, l'ensemble de messages tel que configuré par le fabricant est reçu au moyen d'une interface de communication. Dans ce mode de réalisation particulier où la mémoire de stockage 56 mémorise des messages à transmettre, le message MSG2 est supprimé de l'ensemble des messages « sains » pour ce type de dispositif communicant sur réception de la notification O3-NOK(MSG2), afin d'être bloqué par le dispositif de sécurité 50. Ainsi, la vérification (E1) comprend une comparaison du message MSG1, MSG2 reçu afin de vérifier s'il appartient à l'ensemble de messages à transmettre.

De la même manière que le dispositif récepteur a demandé un blocage du message MSG2 au moyen de la notification O3-NOK(MSG2), le dispositif récepteur 60 peut demander au dispositif de sécurité 50 que le message MSG2 soit de nouveau considéré comme un message à transmettre. Le dispositif de sécurité 50 obtient ainsi au moins un message à transmettre. Ceci permet de revenir à un fonctionnement normal, une fois la faille de sécurité affectant les dispositifs communicants résolue.

Dans un mode de réalisation particulier, le dispositif récepteur 60 peut également demander le blocage du message MSG2 pour ce type de dispositif communicant à d'autres dispositifs de sécurité.

On comprend que cette technique de traitement permet d'améliorer la sécurité d'un réseau de communication, en protégeant des dispositifs récepteurs se situant en arrière-plan de dispositifs communicants qui feraient l'objet d'une attaque malveillante. De tels dispositifs se retrouvent isolés et ne peuvent poursuivre leurs attaques. De plus, cette neutralisation peut également être étendue aux autres dispositifs de même type, voire même aux dispositifs de même fabricant.

Aucune limitation n'est attachée à ces différents modes de réalisation et l'homme du métier est à même d'en définir d'autres neutralisant dans des parties frontales du réseau de communication des dispositifs communicants dont un tiers malveillant a pris le contrôle afin de protéger des dispositifs récepteurs se situant dans des parties du réseau en arrière-plan. Il est ici souligné que la passerelle d'accès peut également contribuer à la neutralisation de dispositifs communicants en détectant des comportements malveillants. La colocalisation du dispositif de sécurité avec la passerelle d'accès permet ainsi de bloquer rapidement des messages émis par des dispositifs communicants qui sont passés sous contrôle d'un tiers malveillant.

La technique de traitement est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le module de traitement 55 est agencé pour mettre en oeuvre celles des étapes du procédé de traitement précédemment décrit, mises en oeuvre par le dispositif de sécurité. Il s'agit de préférence de modules logiciels comprenant des instructions logicielles pour faire exécuter celles des étapes (ou des actions) du procédé de traitement précédemment décrit, mises en oeuvre par un dispositif de sécurité. L'invention concerne donc aussi :
- un programme pour un dispositif de sécurité, comprenant des instructions de code de programme destinées à commander l'exécution de celles des étapes (ou des actions) du procédé de traitement précédemment décrit, lorsque ledit programme est exécuté par ce dispositif de sécurité ;
- un support d'enregistrement lisible par un dispositif de sécurité sur lequel est enregistré le programme pour un dispositif de sécurité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Ainsi le module de traitement 55 est configuré pour :
- vérifier qu'un message envoyé par un dispositif communicant à destination d'un dispositif récepteur est un message à transmettre ;
- transmettre ce message lorsque la vérification est positive et le bloquer lorsque la vérification est négative ;
- recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par le même fabricant et de même identifiant de produit que ceux du dispositif communicant ayant émis ce message.

Dans un mode de réalisation particulier, le module de traitement est en outre agencé pour bloquer des messages ultérieurs de même type que le message pour lequel la notification a été reçue, émis par des dispositifs communicants fournis par le même fabricant et d'identifiant de produit différent de ceux du dispositif communicant ayant émis ledit message.

Un système de sécurité comprend :
- un dispositif de sécurité 50 destiné à traiter un message envoyé par un dispositif communicant 11,21,31,12,22 à destination d'un dispositif récepteur 60, ledit dispositif de sécurité comprenant un module de traitement 55 agencé pour :
   - vérifier que ce message est un message à transmettre ;
   - transmettre ce message lorsque la vérification est positive et le bloquer lorsque la vérification est négative ;
   - recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par le même fabricant et de même identifiant de produit que ceux du dispositif communicant ayant émis ledit message ;
- un dispositif récepteur, agencé pour recevoir ledit message envoyé par le dispositif communicant et transmis par le dispositif de sécurité et pour envoyer cette notification au dispositif de sécurité.

## Revendications

1. Procédé de traitement comprenant :
- une vérification (E1) par un dispositif de sécurité (50) qu'un message envoyé par un dispositif communicant (11,21,31,12,22) à destination d'un dispositif récepteur (60) est un message à transmettre, le message étant transmis au dispositif récepteur lorsque la vérification est positive ;
- une réception (E2) par le dispositif de sécurité d'une notification émise par le dispositif récepteur indiquant que le message transmis est à bloquer,
des messages ultérieurs de même type que le message pour lequel la notification a été reçue, émis par des dispositifs communicants fournis par un même fabricant que celui du dispositif communicant ayant émis ledit message étant bloqués par le dispositif de sécurité lors de ladite vérification, ledit fabricant étant identifié par des identifiants uniques des dispositifs communicants.

2. Procédé de traitement selon la revendication 1, comprenant une neutralisation du dispositif communicant, pour lequel la notification a été reçue.

3. Procédé de traitement selon la revendication 1, dans lequel des messages ultérieurs de même type que le message pour lequel la notification a été reçue, émis par des dispositifs communicants fournis par le même fabricant et de même identifiant de produit de ceux du dispositif communicant ayant émis ledit message sont bloqués par le dispositif de sécurité lors de ladite vérification.

4. Procédé de traitement selon la revendication 1 ou 2, dans lequel des messages ultérieurs de même type que le message pour lequel la notification a été reçue, émis par des dispositifs communicants fournis par le même fabricant et d'identifiant de produit différent de ceux du dispositif communicant ayant émis ledit message sont bloqués par le dispositif de sécurité lors de ladite vérification.

5. Procédé de traitement selon la revendication 1, comprenant une obtention par le dispositif de sécurité d'au moins un message à transmettre.

6. Dispositif de sécurité (50) destiné à traiter un message envoyé par un dispositif communicant (11,21,31,12,22) à destination d'un dispositif récepteur (60), ledit dispositif de sécurité comprenant un module de traitement (55) agencé pour :
- vérifier que ledit message est un message à transmettre ;
- transmettre ledit message lorsque la vérification est positive et le bloquer lorsque la vérification est négative ;
- recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par un mème fabricant que celui du dispositif communicant ayant émis ledit message, ledit fabricant étant identifié par des identifiants uniques des dispositifs communicants.

7. Dispositif de sécurité selon la revendication 6, dans lequel le module de traitement est en outre agencé pour bloquer des messages ultérieurs de même type que le message pour lequel la notification a été reçue, émis par des dispositifs communicants fournis par le même fabricant et de même identifiant de produit de ceux du dispositif communicant ayant émis ledit message.

8. Dispositif de sécurité selon la revendication 6 ou 7, dans lequel le module de traitement est en outre agencé pour bloquer des messages ultérieurs de même type que le message pour lequel la notification a été reçue, émis par des dispositifs communicants fournis par le même fabricant et d'identifiant de produit différent de ceux du dispositif communicant ayant émis ledit message.

9. Système de sécurité comprenant :
- un dispositif de sécurité (50) destiné à traiter un message envoyé par un dispositif communicant (11,21,31,12,22) à destination d'un dispositif récepteur (60), ledit dispositif de sécurité comprenant un module de traitement (55) agencé pour :
- vérifier que ledit message est un message à transmettre ;
- transmettre ledit message lorsque la vérification est positive et le bloquer lorsque la vérification est négative ;
- recevoir une notification émise par le dispositif récepteur indiquant que le message transmis est à bloquer, afin de bloquer lors de la vérification des messages ultérieurs de même type que le message pour lequel la notification a été reçue, émis par des dispositifs communicants fournis par un même fabricant que celui du dispositif communicant ayant émis ledit message, ledit fabricant étant identifié par des identifiants uniques des dispositifs communicants;
- un dispositif récepteur, agencé pour recevoir ledit message envoyé par le dispositif communicant et transmis par le dispositif de sécurité et pour envoyer ladite notification au dispositif de sécurité.

10. Programme pour un dispositif de sécurité, comprenant des instructions de code de programme destinées à commander l'exécution de celles des actions du procédé de traitement selon l'une des revendications 1 à 5 mises en oeuvre par le dispositif, lorsque ledit programme est exécuté par ledit dispositif.

11. Support d'enregistrement lisible par un dispositif de sécurité sur lequel est enregistré le programme selon la revendication 10.

## Patentansprüche

1. Verarbeitungsverfahren, das enthält:
- eine Überprüfung (E1) durch eine Sicherheitsvorrichtung (50), dass eine von einer Kommunikationsvorrichtung (11,21,31,12,22) an eine Empfangsvorrichtung (60) geschickte Nachricht eine zu übertragende Nachricht ist, wobei die Nachricht an die Empfangsvorrichtung übertragen wird, wenn die Überprüfung positiv ist;
- einen Empfang (E2) durch die Sicherheitsvorrichtung einer von der Empfangsvorrichtung gesendeten Mitteilung, die angibt, dass die übertragene Nachricht zu blockieren ist,
wobei spätere Nachrichten des gleichen Typs wie die Nachricht, für die die Mitteilung empfangen wurde, die von Kommunikationsvorrichtungen gesendet wurden, die von einem gleichen Hersteller wie derjenige der Kommunikationsvorrichtung bereitgestellt werden, die die Nachricht gesendet hat, von der Sicherheitsvorrichtung bei der Überprüfung blockiert werden, wobei der Hersteller durch eindeutige Kennungen der Kommunikationsvorrichtungen identifiziert wird.

2. Verarbeitungsverfahren nach Anspruch 1, das ein Außerbetriebsetzen der Kommunikationsvorrichtung enthält, für die die Mitteilung empfangen wurde.

3. Verarbeitungsverfahren nach Anspruch 1, wobei spätere Nachrichten des gleichen Typs wie die Nachricht, für die die Mitteilung empfangen wurde, die von Kommunikationsvorrichtungen gesendet werden, die vom gleichen Hersteller bereitgestellt werden und mit der gleichen Produktkennung wie diejenigen der Kommunikationsvorrichtung, die die Nachricht gesendet hat, von der Sicherheitsvorrichtung bei der Überprüfung blockiert werden.

4. Verarbeitungsverfahren nach Anspruch 1 oder 2, wobei spätere Nachrichten des gleichen Typs wie die Nachricht, für die die Mitteilung empfangen wurde, die von Kommunikationsvorrichtungen gesendet werden, die vom gleichen Hersteller bereitgestellt werden und mit einer anderen Produktkennung als diejenigen der Kommunikationsvorrichtung, die die Nachricht gesendet hat, von der Sicherheitsvorrichtung bei der Überprüfung blockiert werden.

5. Verarbeitungsverfahren nach Anspruch 1, das einen Erhalt mindestens einer zu übertragenden Nachricht durch die Sicherheitsvorrichtung enthält.

6. Sicherheitsvorrichtung (50), die dazu bestimmt ist, eine von einer Kommunikationsvorrichtung (11,21,31, 12,22) an eine Empfangsvorrichtung (60) geschickte Nachricht zu verarbeiten, wobei die Sicherheitsvorrichtung ein Verarbeitungsmodul (55) enthält, das eingerichtet ist, um:
- zu überprüfen, dass die Nachricht eine zu übertragende Nachricht ist;
- die Nachricht zu übertragen, wenn die Überprüfung positiv ist, und sie zu blockieren, wenn die Überprüfung negativ ist;
- eine von der Empfangsvorrichtung gesendete Mitteilung zu empfangen, die angibt, dass die übertragene Nachricht zu blockieren ist, um bei der Überprüfung spätere Nachrichten gleichen Typs wie die Nachricht zu blockieren, für die die Mitteilung empfangen wurde, die von Kommunikationsvorrichtungen gesendet werden, die von einem gleichen Hersteller wie derjenige der Kommunikationsvorrichtung, die die Nachricht gesendet hat, bereitgestellt werden, wobei der Hersteller durch eindeutige Kennungen der Kommunikationsvorrichtungen identifiziert wird.

7. Sicherheitsvorrichtung nach Anspruch 6, wobei das Verarbeitungsmodul außerdem eingerichtet ist, um spätere Nachrichten gleichen Typs wie die Nachricht zu blockieren, für die die Mitteilung empfangen wurde, die von Kommunikationsvorrichtungen gesendet werden, die vom gleichen Hersteller bereitgestellt werden und eine gleiche Produktkennung haben wie diejenigen der Kommunikationsvorrichtung, die die Nachricht gesendet hat.

8. Sicherheitsvorrichtung nach Anspruch 6 oder 7, wobei das Verarbeitungsmodul außerdem eingerichtet ist, um spätere Nachrichten gleichen Typs wie die Nachricht zu blockieren, für die die Mitteilung empfangen wurde, die von Kommunikationsvorrichtungen gesendet werden, die vom gleichen Hersteller bereitgestellt werden und eine andere Produktkennung haben als diejenigen der Kommunikationsvorrichtung, die die Nachricht gesendet hat.

9. Sicherheitssystem, das enthält:
- eine Sicherheitsvorrichtung (50), die dazu bestimmt ist, eine von einer Kommunikationsvorrichtung (11,21,31, 12,22) an eine Empfangsvorrichtung (60) geschickte Nachricht zu verarbeiten, wobei die Sicherheitsvorrichtung ein Verarbeitungsmodul (55) enthält, das eingerichtet ist, um:
- zu überprüfen, dass die Nachricht eine zu übertragende Nachricht ist;
- die Nachricht zu übertragen, wenn die Überprüfung positiv ist, und sie zu blockieren, wenn die Überprüfung negativ ist;
- eine von der Empfangsvorrichtung gesendete Mitteilung zu empfangen, die angibt, dass die übertragene Nachricht zu blockieren ist, um bei der Überprüfung spätere Nachrichten gleichen Typs wie die Nachricht zu blockieren, für die die Mitteilung empfangen wurde, die von Kommunikationsvorrichtungen gesendet wurden, die von einem gleichen Hersteller wie derjenige der Kommunikationsvorrichtung bereitgestellt wurden, die die Nachricht gesendet hat, wobei der Hersteller durch eindeutige Kennungen der Kommunikationsvorrichtungen identifiziert wird;
- eine Empfangsvorrichtung, die eingerichtet ist, um die Nachricht zu empfangen, die von der Kommunikationsvorrichtung geschickt und von der Sicherheitsvorrichtung übertragen wird, und um die Mitteilung an die Sicherheitsvorrichtung, zu schicken.

10. Programm für eine Sicherheitsvorrichtung, das Programmcodeanweisungen enthält, die dazu bestimmt sind, die Ausführung derjenigen der Aktionen des Verarbeitungsverfahrens nach einem der Ansprüche 1 bis 5 zu steuern, die von der Vorrichtung durchgeführt werden, wenn das Programm von der Vorrichtung ausgeführt wird.

11. Speicherträger, der von einer Sicherheitsvorrichtung lesbar ist, auf dem das Programm nach Anspruch 10 gespeichert ist.

## Claims

1. Processing method comprising:
- a verification (E1) by a security device (50) that a message sent by a communicating device (11,21,31,12,22) to a receiver device (60) is a message to be transmitted, the message being transmitted to the receiver device when the verification is positive;
- a reception (E2) by the security device of a notification sent by the receiver device indicating that the transmitted message is to be blocked,
subsequent messages of the same type as the message for which the notification was received, sent by communicating devices provided by the same manufacturer as that of the communicating device that sent said message being blocked by the security device during said verification, said manufacturer being identified via unique identifiers of the communicating devices.

2. Processing method according to Claim 1, comprising a neutralization of the communicating device for which the notification was received.

3. Processing method according to Claim 1, wherein subsequent messages of the same type as the message for which the notification was received, sent by communicating devices provided by the same manufacturer and of the same product identifier as those of the communicating device that sent said message are blocked by the security device during said verification.

4. Processing method according to Claim 1 or 2, wherein subsequent messages of the same type as the message for which the notification was received, sent by communicating devices provided by the same manufacturer and of different product identifier to those of the communicating device that sent said message are blocked by the security device during said verification.

5. Processing method according to Claim 1, comprising an obtainment by the security device of at least one message to be transmitted.

6. Security device (50) intended to process a message sent by a communicating device (11,21,31,12,22) to a receiver device (60), said security device comprising a processing module (55) arranged to:
- verify that said message is a message to be transmitted;
- transmit said message when the verification is positive and block it when the verification is negative;
- receive a notification sent by the receiver device indicating that the transmitted message is to be blocked, in order to block during the verification subsequent messages of the same type as the message for which the notification was received, sent by communicating devices provided by the same manufacturer as that of the communicating device that sent said message, said manufacturer being identified via unique identifiers of the communicating devices.

7. Security device according to Claim 6, wherein the processing module is furthermore arranged to block subsequent messages of the same type as the message for which the notification was received, sent by communicating devices provided by the same manufacturer and of the same product identifier as those of the communicating device that sent said message.

8. Security device according to Claim 6 or 7, wherein the processing module is furthermore arranged to block subsequent messages of the same type as the message for which the notification was received, sent by communicating devices provided by the same manufacturer and of different product identifier to those of the communicating device that sent said message.

9. Security system comprising:
- a security device (50) intended to process a message sent by a communicating device (11,21,31,12,22) to a receiver device (60), said security device comprising a processing module (55) arranged to:
- verify that said message is a message to be transmitted;
- transmit said message when the verification is positive and block it when the verification is negative;
- receive a notification sent by the receiver device indicating that the transmitted message is to be blocked, in order to block during the verification subsequent messages of the same type as the message for which the notification was received, sent by communicating devices provided by the same manufacturer as that of the communicating device that sent said message, said manufacturer being identified via unique identifiers of the communicating devices;
- a receiver device, arranged to receive said message sent by the communicating device and transmitted by the security device and to send said notification to the security device.

10. Program for a security device, comprising program-code instructions intended to command the execution of those of the actions of the processing method according to one of Claims 1 to 5 that are implemented by the device, when said program is executed by said device.

11. Storage medium readable by a security device, on which is stored the program according to Claim 10.
